# EUROPÄISCHE PATENTSCHRIFT

(11) **EP 0 802 364 B1**
(45) Veröffentlichungstag und Bekanntmachung des Hinweises auf die Patenterteilung: **04.08.1999**
(21) Anmeldenummer: 97105825.0
(22) Anmeldetag: 09.04.1997
(51) Int. Cl.: F16L 5/00, F16L 59/12, H02G 3/04

(54) **Blende zum Kaschieren von Wanddurchbrüchen**
Panel for covering wall openings
Cache pour recouvrir des ouvertures murales

(30) Priorität: 19.04.1996 DE 29606987 U
(43) Veröffentlichungstag der Anmeldung: 22.10.1997
(73) Patentinhaber: Tehalit GmbH, D-67716 Heltersberg (DE)
(72) Erfinder: Wittman, Jan, 67714 Waldfischbach-Burgalben (DE); Scherer, Peter, Dipl.-Ing., 67655 Kaiserslautern (DE)
(74) Vertreter: Patentanwälte Möll und Bitterich

(56) Entgegenhaltungen:
- DE-A- 2 809 463
- DE-U- 9 003 636

## Beschreibung

Die Erfindung betrifft Blenden für Installationskanäle wie Leitungsführungskanäle, Geräteeinbaukanäle, Kabelbahnen usw. zum Kaschieren von Wanddurchbrüchen gemäß dem Oberbegriff des Anspruchs 1. Solche Blenden sind z.b. aus der DE-A-2809463 bekannt.

Werden Installationskanäle durch Wände hindurchgeführt, muß der Mauerdurchbruch durch eine geeignete Blende kaschiert werden. Hierzu ist ein sogenannter Eckwinkel-Bausatz handelsüblich, bestehend aus zwei Eckstücken mit Raststegen, einem Wandblechprofil-Führungsstück und Aluminium-Wandblechprofilschienen. Letztere werden von einer Standardschiene entsprechend der Kanalhöhe und -tiefe abgelängt und auf den Eckwinkel-Bausatz aufgeclipst. Mit Hilfe einer solchen aus Einzelteilen zusammengesteckten Wandblende läßt sich der Wanddurchbruch kaschieren; das optische Bild der Blende ist jedoch wenig befriedigend, insbesondere da die Schnittkanten der Aluminium-Wandblendprofilschienen sichtbar bleiben.

Der vorliegenden Erfindung liegt die Aufgabe zugrunde, eine Blende der eingangs genannten Art anzugeben, die einfach und preiswert ist, die fest sitzt, jedoch auch schnell montiert und demontiert werden kann, die an jede Kanalabmessung angepaßt werden kann und die insbesondere ein optisch befriedigendes Bild erzeugt.

Diese Aufgabe wird gelöst durch eine Blende mit den Merkmalen des Anspruchs 1.

Die erfindungsgemäße Blende verwendet vier vorgefertigte, insbesondere aus Kunststoff gespritzte Kaschierecken und vier dazu passende Profilschienen, die von einem vorgefertigten Profilstab abgelängt werden. Die Verbindung erfolgt durch eine Rastverbindung, wobei die Rastmittel so angeordnet sind, daß die Schnittkanten der Profilschienen von den Kaschierecken verdeckt werden, so daß etwaige Ungenauigkeiten unsichtbar bleiben. Dank der Rastverbindung ist außerdem in gewissen Grenzen ein Längenausgleich möglich, so daß in jedem Fall eine zu dem jeweiligen Installationskanal genau passende Blende hergestellt werden kann.

Damit die Blende an ihrem Montageort fest montiert, bei Bedarf jedoch wieder gelöst werden kann, sind zusätzlich ein oder zwei Wandhalter und ein Rastschieber vorgesehen. Der Wandhalter wird an der durchbrochenen Wand und/oder am Kanal fixiert. Er besitzt spezielle Haltenasen mit einer gezahnten Wirkfläche, die mit an der Rückseite der Kaschierecken vorgesehenen Haltefedern mit ebenfalls gezahnter Wirkfläche zusammenwirken. Dabei sorgt der Rastschieber, der eine entsprechende Halterung besitzt, dafür, daß die Haltefedern an den Kaschierecken während der Montage frei beweglich sind und von den Haltenasen der Wandhalter abgezogen werden können; in der End- bzw. Sperrposition dagegen werden die Haltefedern so blockiert, daß die Blende nicht mehr abgezogen werden kann.

Um den Rastschieber montieren zu können, ist an der Rückseite der Profilschiene, und zwar an der an den Kanal angrenzenden Längskante, eine Halteleiste angeformt, die parallel zur Oberfläche des Kanals orientiert ist. In diese Halteleiste in eine Rastkante eingeformt, die mit einer Rastnase an der Rastzunge des Rastschiebers korrespondiert und den Rastschieber in der Sperrposition fixiert.

Vorzugsweise schließen die Seitenkanten der Kaschierecken einen stumpfen Winkel zueinander ein. Dies sorgt für eine breite Überdeckung der Schnittkanten der Profilschienen.

Gemäß einer Weiterbildung der Erfindung schließen die Sichtflächen der Blende einen spitzen Winkel zur Wandfläche ein. Dies verleiht der Blende einen optisch gefälligen Eindruck und reduziert die Anlage an der Wand.

Vorzugsweise sind die Wandhalter an ihrer dem Kanal zugewandten Fläche mit einer Klebeschicht ausgerüstet, wodurch die Montage der Wandhalter erleichtert und der korrekte Sitz der Blende verbessert wird.

Weitere Ausgestaltungen der Erfindung sind Gegenstand der restlichen Unteransprüche.

Anhand der Zeichnung soll die Erfindung in Form von Ausführungsbeispielen näher erläutert werden. Es zeigen
- Fig. 1: eine perspektivische Darstellung eines Leitungsführungskanals mit Blende zum Kaschieren eines Wanddurchbruchs, auf die Sichtseite gesehen,
- Fig. 2: eine perspektivische Darstellung von Kanal und Blende, hier von der Rückseite gesehen,
- Fig. 3: eine Draufsicht auf die Rückseite einer Kaschierecke,
- Fig. 4: einen Schnitt durch eine Profilschiene mit montiertem Rastschieber im Anlieferungszustand,
- Fig. 5: eine Darstellung der Kombination aus Profilschiene und Rastschieber gemäß Fig. 4 im End- bzw. Sperrzustand,
- Fig. 6: die Kombination von Profilstab und Rastschieber gemäß Fig. 4 im Demontagezustand,
- Fig. 7: einen Schnitt durch die Kombination aus Profilstab, Rastschieber und Wandhalter im Bereich von Haltefeder und Haltenase im werksseitigen Lieferzustand,
- Fig. 8: einen Schnitt durch die Kombination der Fig. 7 im End- bzw. Sperrzustand und
- Fig. 9: einen Schnitt durch die Kombination der Fig. 7 im Demontagezustand.

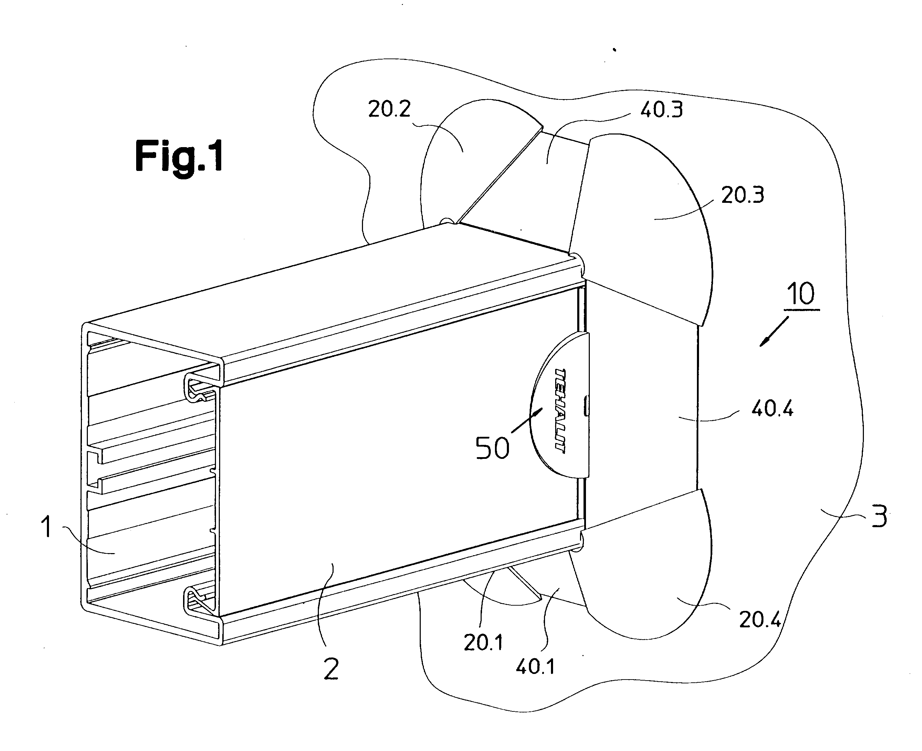

Fig. 1 zeigt in perspektivischer Darstellung einen Leitungsführungskanal 1 mit Deckel 2, der eine Wand 3 durchbricht. Der Wanddurchbruch ist mit Hilfe einer Blende 10 kaschiert. Diese besteht aus vier Kaschierecken 20.1 ... 20.4 und vier Profilschienen 40.1 ... 40.4. Kaschierecken 20 und Profilstäbe 40 sind zusammengesteckt. Ein Rastschieber 50 macht es möglich, die Blende 10 nach der Positionierung vor dem Wanddurchbruch zu fixieren.

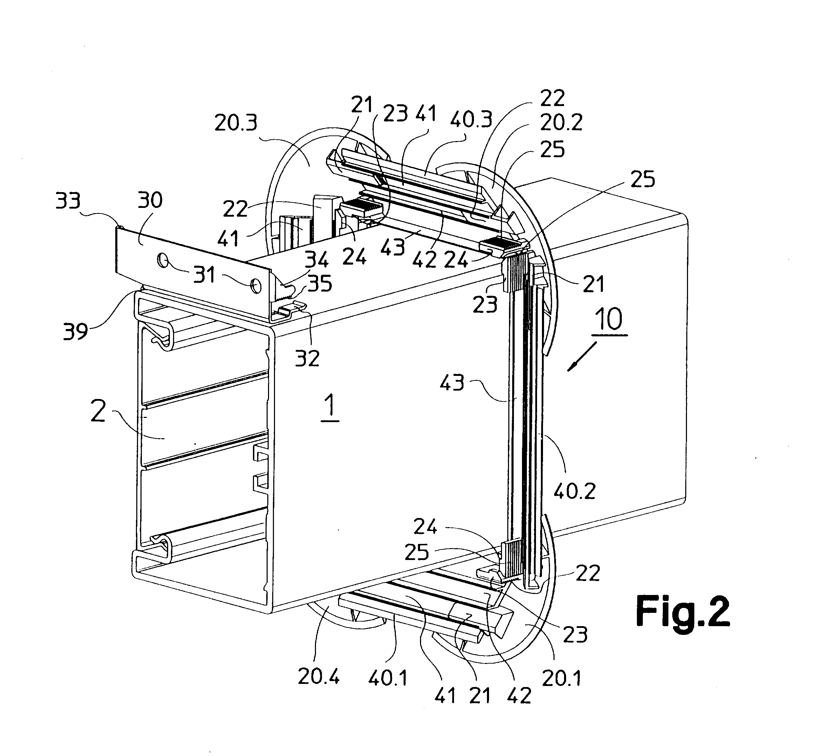

Fig. 2 zeigt einen Blick auf die Rückseite von Kanal 1, 2 und Blende 10.

Auf einer Schmalseite des Kanals 1 ist mit Hilfe einer Kleberschicht 39 ein Wandhalter 30 montiert. Dessen der Wandoberfläche zugewandte Fläche ist mit zwei Bohrungen 31 ausgerüstet für eine eventuelle Schraubmontage. Parallel zum Kanal 1 erkennt man eine Zunge 32, die mit den Profilschienen 40 zusammenwirkt. Außerdem erkennt man am Wandhalter 30 zwei Haltenasen 33, 34 mit einer gezahnten Wirkfläche 35, die mit den Kaschierecken 20 zusammenwirkt.

An der Rückseite der Profilschienen 40 erkennt man angrenzend an den Kanal 1 eine Halteleiste 43, die sich parallel zu den Oberflächen des Kanals 1 erstreckt. Des weiteren erkennt man zwei Zahnungen 41, 42, mit deren Hilfe die Rastverbindung zu den Kaschierecken 20 hergestellt wird.

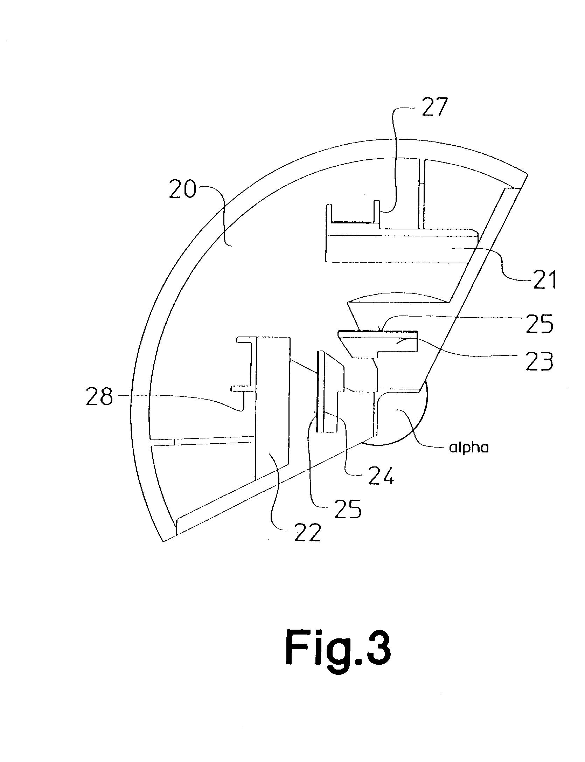

Die Konstruktion der Kaschierecken 20 ergibt sich aus der Draufsicht auf die Rückseite einer Kaschierecke 20 in vergrößerter Darstellung gemäß Fig. 3. Man erkennt zwei rechtwinklig zueinander orientierte Rastzungen 21, 22, die mit den Zahnungen 41, 42 zusammenwirken. Man erkennt des weiteren zwei Anschläge 27, 28, die die Eintauchtiefe der Profilschienen 40 begrenzen. Schließlich erkennt man zwei rechtwinklig zueinander orientierte Haltefedern 23, 24 mit gezahnter Wirkfläche 25. Diese korrespondiert mit der gezahnten Wirkfläche 35 der Haltenase 33, 34 des Wandhalters 30. Dank der federnden Eigenschaften der Haltefedern 23, 24 können die Kaschierecken 20 von dem Wandhalter 30 abgezogen werden.

Die Seitenkanten der Kaschierecken 20 schließen gegenseitig einen stumpfen Winkel alpha ein.

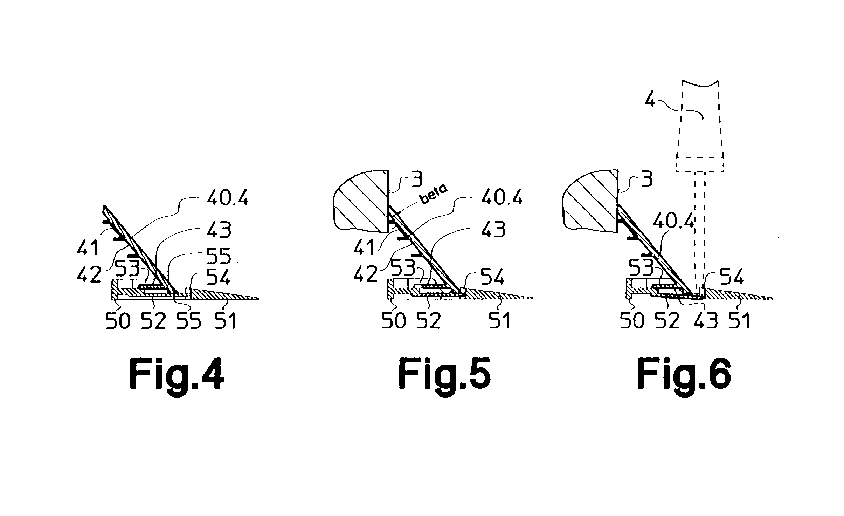

Um die Blende 10 in ihrer Endposition vor dem Wanddurchbruch fixieren zu können, ist der Rastschieber 50 vorgesehen. Dieser wird auf die Halteleiste 43 einer Profilschiene 40.4 aufgeschoben, wozu er mit einer entsprechenden Halterung 53 ausgerüstet ist. Dies zeigen die Fig. 4, 5 und 6.

Der Rastschieber 50 besitzt des weiteren eine zentrale Aussparung 54, in der eine federnde Rastzunge 52 sitzt, die mit einer Rastnase 55 ausgerüstet ist. Schließlich ist noch ein Sichtteil 51 vorgesehen, welches den End- oder Sperrzustand des Rastschiebers 50 definiert.

Fig. 4 zeigt auszugsweise die Relativposition von Rastschieber 50 und Profilschiene 40.4 im Lieferzustand. Der Rastschieber 50 ist so weit herausgezogen, daß die Rastnase 55 sichtbar ist.

Fig. 5 zeigt die Kombination der Fig. 4 im End- oder Sperrzustand vor einer Wand 3. Der Rastschieber 50 ist so weit unter die Profilschiene 40.4 geschoben, daß die Rastnase 55 hinter einer an der Halteleiste 43 vorgesehenen Rastkante 45 einrastet.

Fig. 6 zeigt die Situation beim Demontieren der Blende 10. Mit der Spitze eines Schraubendrehers 4 wird durch Verbiegen der Rastzunge 52 die Rastnase 55 von der Rastkante 45 gelöst und der Rastschieber 50 nach vorne gezogen.

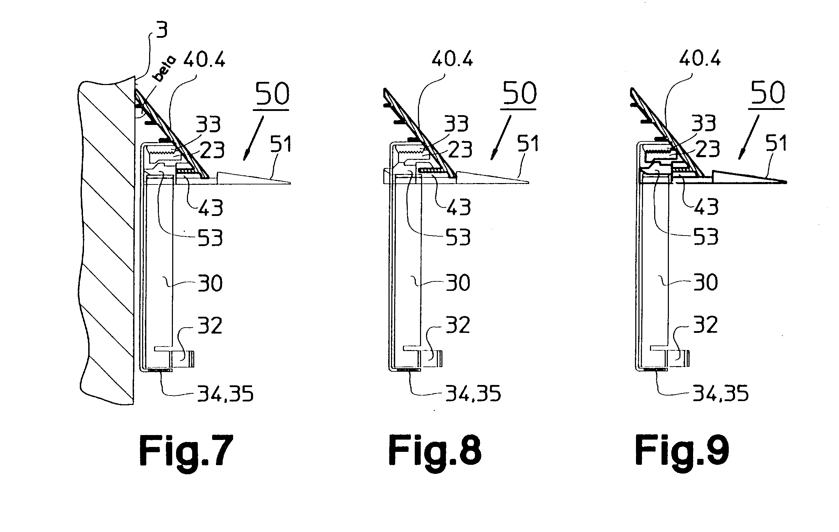

Anhand der Fig. 7, 8 und 9 wird die Wirkung der anhand der Fig. 4, 5 und 6 beschriebenen Stellungen des Rastschiebers 50 erläutert.

Fig. 7 zeigt auszugsweise die Kombination aus Profilschiene 40.4, Rastschieber 50 und Wandhalter 30 vor der durchbrochenen Wand 3. An der Hinterseite des Rastschiebers 50 ist eine Halterung 53 angeformt, die mit der Haltefeder 23 an der Rückseite der Kaschierecke 20 korrespondiert. In dem in Fig. 7 dargestellten Lieferzustand sind Halterung 53 und Haltefeder 23 getrennt. Die Haltefeder 23 ist federnd beweglich, die Kaschierecke 20 und damit die gesamte Blende 10 können von den Haltenasen 33, 34 der Wandhalter 30 abgezogen werden.

Fig. 8 zeigt die Situation im End- bzw. Sperrzustand. Die Halterung 53 blockiert jetzt die Haltefeder 23. Die Rastverbindung zwischen Haltefeder 23 und Rastnase 33 läßt sich nicht mehr lösen, die Blende 10 ist dauerhaft fixiert.

Fig. 9 zeigt die Situation während der Demontage. Der Rastschieber 50 ist in die gelöste Position verschoben.

DieHalterung 53 hat die Haltefeder 23 freigegeben, so daß die Blende 10 von den gezahnten Wirkflächen 35 der Haltenasen 33, 34 des Wandhalters 30 abgezogen werden kann.

Die Zungen 32 am Wandhalter 30 sind so angeordnet, daß sie die Halteleiste 43 festklemmen, wie es für einen festen, jedoch lösbaren Halt der Blende 10 erforderlich ist.

## Patentansprüche

1. Blende (10) für Installationskanäle (1, 2) wie Leitungsführungskanäle, Geräteeinbaukanäle usw. zum Kaschieren von Wanddurchbrüchen, zusammengesteckt aus vorgefertigten bzw. entsprechend der Kanal-Abmessungen abgelängten Teilen (20, 30, 40, 50), gekennzeichnet durch die Merkmale:
- es sind vier Kaschierecken (20.1 ... 20.4) vorgesehen,
- jede Kaschierecke (20) besitzt auf ihrer Rückseite
-- zwei winklig zueinander orientierte Rastzungen (21, 22) und
-- zwei winklig zueinander orientierte Haltefedern (23, 24) mit einer gezahnten Wirkfläche (25),
- es sind zwei Wandhalter (30.1, 30.2) vorgesehen,
- jeder Wandhalter (30) besitzt wenigstens eine Haltenase (33, 34)
- die Haltenase (33, 34) besitzt eine gezahnte Wirkfläche (35), die mit der Wirkfläche (25) der Haltefedern (23, 24) kooperiert,
- es sind vier Profilschienen (40) vorgesehen, deren Länge an die Abmessungen des Kanals (1, 2) angepaßt ist,
- jede Profilschiene (40) besitzt auf ihrer Rückseite
-- wenigstens eine Zahnung (41, 42), mit mit den Rastzungen (21, 22) kooperiert, und
-- eine Halteleiste (43), die an der an den Kanal (1, 2) anstoßenden Längsseite positioniert und parallel zur Kanaloberfläche orientiert ist,
- es ist ein Rastschieber (50) vorgesehen,
- der Rastschieber (50) besitzt
-- auf seiner Rückseite eine Halterung (53), die auf die Profilschiene (40) aufsteckbar ist,
-- einen Ausschnitt (54) und darin
-- eine federnde Rastzunge (52), die mit der Profilschiene (40) kooperiert,
- die Halterung (53) greift so hinter die Haltefedern (23, 24), daß diese
-- in der Montageposition des Rastschiebers (50) frei beweglich,
-- in seiner Endposition dagegen blockiert sind.

2. Blende nach Anspruch 1, gekennzeichnet durch die Merkmale:
- es sind zwei Zahnungen (41, 42) vorgesehen,
- die Zahnungen (41, 42) sind einander entgegengesetzt sägezahnförmig profiliert.

3. Blende nach Anspruch 1 oder 2, gekennzeichnet durch das Merkmal:
- der Wandhalter (30) besitzt wenigstens eine Zunge (32), die die Halteleiste (43) festklemmt.

4. Blende nach einem der Ansprüche 1 bis 3, gekennzeichnet durch das Merkmal:
- die Kanten (29) der Kaschierecken (20) schließen einen stumpfen Winkel (alpha) ein.

5. Blende nach einem der Ansprüche 1 bis 4, gekennzeichnet durch das Merkmal:
- die Kaschierecken (20) besitzen auf ihrer Rückseite je einen Anschlag (27, 28) für die Profilschienen (30).

6. Blende nach einem der Ansprüche 1 bis 5, gekennzeichnet durch das Merkmal:
- die Sichtflächen der Blende (10) schließen einen spitzen Winkel (beta) zur Wandfläche (3) ein.

7. Blende nach einem der Ansprüche 1 bis 6, gekennzeichnet durch die Merkmale:
- der Wandhalter (30) besteht aus Metall,
- die anderen Teile (20, 40, 50) aus Kunststoff.

8. Blende nach einem der Ansprüche 1 bis 7, gekennzeichnet durch das Merkmal:
- der Wandhalter (30) trägt an seiner dem Kanal (1, 2) zugewandten Fläche eine Klebeschicht (39).

9. Blende nach einem der Ansprüche 1 bis 8, gekennzeichnet durch die Merkmale.
- in die Halteleiste (43) ist eine Rastkante (45) eingeformt,
- eine Rastnase (55) an der Rastzunge (52) korrespondiert mit der Rastkante (45).

## Claims

1. Screen (10) for skirting trunkings (1, 2), such as wiring trunkings, appliance installation trunkings, etc., for lining wall openings, composed of parts (20, 30, 40, 50) which are prefabricated or cut to length according to the skirting dimensions, characterised by the features:
- four lining corners (20.1 ... 20.4) are provided,
- each lining corner (20) has on its rear side
-- two locking tongues (21, 22) directed at an angle to one another and
-- two retaining springs (23, 24) directed at an angle to one another and having a toothed active face (25),
- two wall brackets (30.1, 30.2) are provided,
- each wall bracket (30) has at least one retaining lug (33, 34),
- the retaining lug (33, 34) has a toothed active face (35), which co-operates with the active face (25) of the retaining springs (23, 24),
-- four profiled rails (40) are provided, the length of which is adapted to the dimensions of the trunking (1, 2),
- each profiled rail (40) has on its rear side
-- at least one tooth system (41, 42), which co-operates with the locking tongues (21, 22), and
-- a retaining strip (43), which is positioned at the longitudinal side abutting the trunking (1, 2) and directed parallel to the trunking surface,
- a locking slide (50) is provided,
- the locking slide (50) has
-- on its rear side a holder (53), which can be fitted on the profiled rail (40),
-- a cut-out (54) and therein
-- a resilient locking tongue (52), which co-operates with the profiled rail (40),
- the holder (53) engages behind the retaining springs (23, 24) such that these
-- can move freely when the locking slide (50) is in the assembly position,
-- yet are blocked when it is in its final position.

2. Screen according to claim 1, characterised by the features:
- two tooth systems (41, 42) are provided,
- the tooth systems (41, 42) have sawtooth profiles extending in opposite directions.

3. Screen according to claim 1 or 2, characterised by the feature:
- the wall bracket (30) has at least one tongue (32), which clamps the retaining strip (43).

4. Screen according to one of claims 1 to 3, characterised by the feature:
- the edges (29) of the lining corners (20) form an obtuse angle (alpha).

5. Screen according to one of claims 1 to 4, characterised by the feature:
- the lining corners (20) have on their rear side a respective stop (27, 28) for the profiled rails (30).

6. Screen according to one of claims 1 to 5, characterised by the feature:
- the visible faces of the screen (10) form an acute angle (beta) with the wall face (3).

7. Screen according to one of claims 1 to 6, characterised by the features:
- the wall bracket (30) consists of metal,
- the other parts (20, 40, 50) of a plastics material.

8. Screen according to one of claims 1 to 7, characterised by the feature:
- the wall bracket (30) bears an adhesive layer (39) at its face which is turned towards the trunking (1, 2).

9. Screen according to one of claims 1 to 8, characterised by the features:
- a locking edge (45) is formed into the retaining strip (43),
- a locking lug (55) at the locking tongue (52) corresponds with the locking edge (45).

## Revendications

1. Collerette de passage de cloison (10) pour conduits d'installation (1, 2) tels que des goulottes de distribution, des goulottes d'installation, etc, servant à masquer des traversées de parois, composé de parties (20, 30, 40, 50) préfabriquées ou mises à longueur en fonction des dimensions du conduit, caractérisée en ce que :
- on prévoit quatre coins de masquage (20.1 à 20.4),
- chaque coin de masquage (20) possède sur sa face arrière :
• deux languettes d'encliquetage (21, 22) orientées en faisant un angle entre elles et
• deux ressorts de maintien (23, 24) orientés en faisant un angle entre eux et possédant une surface active dentée (25),
- on prévoit deux supports muraux (30.1, 30.2),
- chaque support mural (30) possède au moins un talon de retenue (33, 34),
- le talon de retenue (33, 34) possède une surface active dentée (35) qui coopère avec la surface active (25) des ressorts de maintien (23, 24),
- on prévoit quatre rails profilés (40) dont la longueur est adaptée aux dimensions du conduit (1, 2),
- chaque rail profilé (40) possède sur sa face arrière
• au moins une denture (41, 42) qui coopère avec les languettes d'encliquetage (21, 22), et
• une réglette de maintien (43) qui est positionnée sur le côté longitudinal adjacent du conduit (1, 2) et orientée parallèlement à la surface du conduit,
- on prévoit un coulisseau cranté (50),
- le coulisseau cranté (50) possède
• sur sa face arrière une fixation (53) qui peut être emboîtée sur le rail profilé (40),
• une découpe (54) et dans celle-ci
• une languette d'encliquetage élastique (52) qui coopère avec le rail profilé (40),
- la fixation (53) vient en prise à l'arrière des ressorts de maintien (23, 24) de telle sorte que
• ils peuvent se déplacer librement dans la position de montage du coulisseau cranté (50),
• ils sont en revanche bloqués dans leur position finale.

2. Collerette selon la revendication 1, caractérisée en ce que :
- on prévoit deux dentures (41, 42),
- les dentures (41, 42) sont profilées en forme de dents de scie en sens contraire l'une de l'autre.

3. Collerette selon la revendication 1, caractérisée en ce que :
- le support mural (30) possède au moins une languette (32) qui verrouille la réglette de maintien (43).

4. Collerette selon l'une des revendications 1 à 3, caractérisée en ce que :
- les arêtes (29) des coins de masquage (20) constituent un angle obtus (alpha).

5. Collerette selon l'une des revendications 1 à 4, caractérisée en ce que :
- les coins de masquage (20) possèdent sur leur face arrière, chacun une butée (27, 28) pour les rails profilés (30).

6. Collerette selon l'une des revendications 1 à 5, caractérisée en ce que :
- les surfaces visibles de l'obturateur (10) constituent un angle aigu (bêta) par rapport à la surface du mur (3).

7. Collerette selon l'une quelconque des revendications 1 à 6, caractérisée en ce que :
- le support mural (30) est en métal,
- les autres parties (2, 40, 50) sont réalisées en plastique.

8. Collerette selon l'une quelconque des revendications 1 à 7, caractérisée en ce que :
- le support mural (30) supporte sur sa surface tournée vers le canal (1, 2) une couche de colle (39).

9. Collerette selon l'une quelconque des revendications 1 à 8, caractérisée en ce que :
- dans la réglette de maintien est formée une arête d'encliquetage (45),
- un taquet d'encliquetage (55) au niveau de la languette d'encliquetage (52) correspond à l'arête d'encliquetage (45).
